# FASCICULE DE BREVET EUROPEEN

(11) **EP 3 855 110 B1**
(45) Date de publication et mention de la délivrance du brevet: **02.08.2023**
(21) Numéro de dépôt: 21152301.4
(22) Date de dépôt: 19.01.2021
(51) Int. Cl.: G01B 3/20, G01B 5/06, G01B 11/06, B61K 13/00

(54) **DISPOSITIF ET PROCÉDÉ DE MESURE D'UN ÉCART ENTRE UN BORD D'UN QUAI ET UN SEUIL D'UN VÉHICULE FERROVIAIRE**
VORRICHTUNG UND VERFAHREN ZUR MESSUNG EINES ABSTANDS ZWISCHEN EINER BAHNSTEIGKANTE UND EINER SCHWELLE EINES SCHIENENFAHRZEUGS
DEVICE AND METHOD FOR MEASURING A GAP BETWEEN AN EDGE OF A PLATFORM AND A THRESHOLD OF A RAILWAY VEHICLE

(30) Priorité: 21.01.2020 FR 2000565
(43) Date de publication de la demande: 28.07.2021
(73) Titulaire: ALSTOM Transport Technologies, 93400 Saint-Ouen-sur Seine (FR)
(72) Inventeur: MARTIN, David, Jérôme, 17220 Sainte-Soulle (FR)
(74) Mandataire: Lavoix

(56) Documents cités:
- DE-A1- 19 707 554
- GB-A- 2 450 485
- US-B1- 6 205 672
- Clearsy System Engineering: "FERSIL GAPS SIL2 Platform Detection System", , 2016, XP055734815, Extrait de l'Internet: URL:https://www.fersil-railway.com/wp-cont ent/uploads/sites/9/2016/02/Technical-Data -GAPS-railway-us.pdf [extrait le 2020-09-29]

## Description

La présente invention concerne un outil de mesure adapté pour mesurer un premier écart entre un bord d'un quai et un seuil d'un véhicule ferroviaire, le premier écart étant mesuré dans une direction transversale du véhicule ferroviaire.

Dans le secteur du transport de voyageurs, plus particulièrement le transport ferroviaire, un véhicule est amené à réaliser plusieurs arrêts dans des stations, ou gares, pour permettre la sortie ou l'entrée de passagers.

L'accès des passagers à un véhicule s'opère au niveau du seuil du véhicule qui se trouve disposé globalement en regard du quai de la station. Afin de faciliter la montée et la descente des passagers, en particulier des personnes à mobilité réduite, l'écart entre le bord du quai et le seuil du véhicule répond à des requis dimensionnels, aussi bien concernant l'écart horizontal que l'écart vertical.

Ces écarts, aussi appelés lacunes, sont donc contrôlés avant la mise en service commerciale d'un nouveau véhicule ferroviaire. Des opérations de contrôle sont réalisées pour vérifier que le véhicule ferroviaire s'inscrit bien dans l'infrastructure destinée à le recevoir et que les spécifications dimensionnelles sont respectées. Pour cela, les écarts entre le bord du quai de la station et le seuil du véhicule ferroviaire sont mesurés au niveau de chaque porte du véhicule et à chaque station destinée à être desservie par le véhicule ferroviaire.

Ces opérations sont généralement réalisées au moyen d'un mètre ruban ou d'un mètre de menuisier et d'une règle. Par exemple, pour mesurer les lacunes horizontales, la règle est maintenue le long du quai à la verticale et la distance du seuil de la porte du véhicule jusqu'à la règle est mesurée à l'aide du mètre. L'intersection entre la règle et le mètre donne visuellement le point de mesure.

Pour mesurer les lacunes verticales, un mètre ruban est placé à la verticale sur le quai et un niveau laser est disposé sur un plancher du véhicule ferroviaire et projette un repère lumineux sur la règle.

Toutefois, ces méthodes de mesure ne donnent pas entière satisfaction. En effet, le point de mesure est difficile à identifier visuellement et est susceptible de varier d'un opérateur à un autre. Le positionnement des outils est également imprécis. Les mesures réalisées sont donc peu précises et difficilement répétables d'un opérateur à l'autre. De plus, le temps nécessaire à ces opérations est important, par exemple de l'ordre de deux à trois jours pour une ligne comportant vingt stations.

Un des buts de l'invention est d'améliorer la prise de mesure des écarts entre un bord de quai et un seuil d'un véhicule ferroviaire, en augmentant la précision et la répétabilité des mesures.

A cet effet, l'invention a pour objet un dispositif de mesure selon la revendication 1.

Le dispositif de mesure selon l'invention peut comprendre l'une ou plusieurs des caractéristiques des revendications 2 à 6, prise(s) isolément ou suivant toute combinaison techniquement possible.

L'invention a également pour objet un procédé de mesure selon la revendication 7.

L'invention sera mieux comprise à la lecture de la description qui va suivre, donnée uniquement à titre d'exemple, et faite en se référant aux dessins annexés, sur lesquels :
La figure 1 est une vue schématique partiellement en coupe d'un dispositif de mesure adapté pour mesurer un écart entre un bord de quai et un seuil d'un véhicule ferroviaire selon l'invention, le dispositif de mesure comprenant notamment un outil de mesure selon l'invention ; et
La figure 2 est une vue en perspective de trois-quarts face de l'outil de mesure représenté sur la figure 1.

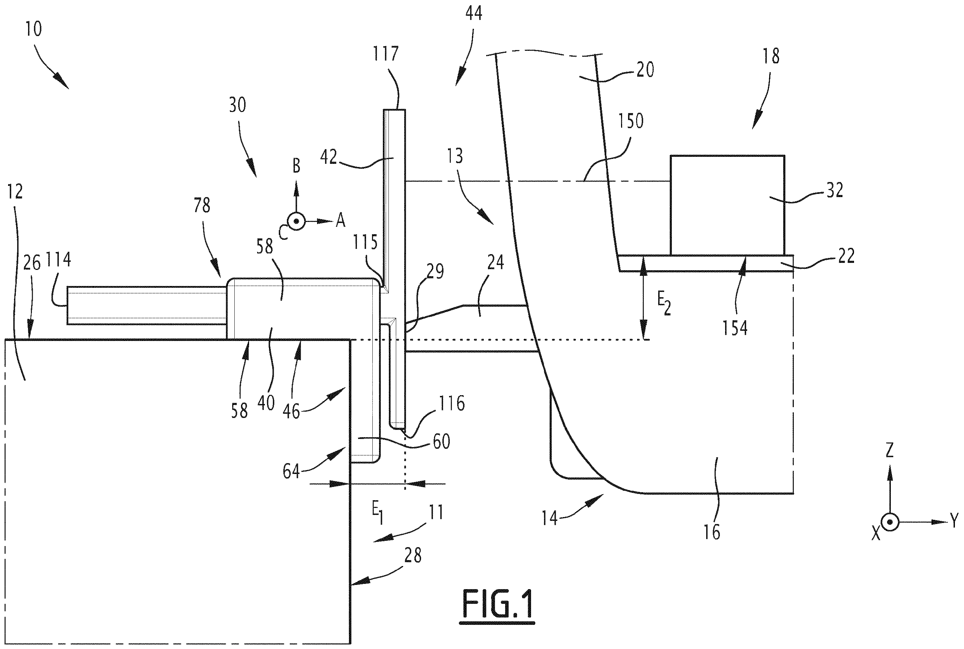

Un dispositif de mesure 10 selon l'invention est représenté schématiquement sur la figure 1. Le dispositif de mesure 10 est adapté pour mesurer un écart entre un bord 11 d'un quai 12 et un seuil 13 d'un véhicule ferroviaire 14.

Dans la présente description, les termes « vertical » et « horizontal » sont définis par rapport au véhicule ferroviaire 14. Ainsi, un plan horizontal est sensiblement parallèle au plan de roulement du véhicule 14 et la direction verticale, ou d'élévation, est sensiblement perpendiculaire au plan de roulement.

Dans la présente description, les termes « avant », « arrière », « gauche », « droite » sont définis par rapport au sens normal de déplacement du véhicule ferroviaire 14.

Le véhicule ferroviaire 14 est par exemple un tramway, un métro ou un train.

Le véhicule 14 est apte à circuler et à s'arrêter à une station comportant un quai 12 s'étendant à une certaine distance du plan de roulement du véhicule ferroviaire 14.

Le véhicule ferroviaire 14 s'étend sensiblement selon une direction longitudinale X, correspondant à la direction avant-arrière du véhicule, une direction transversale Y, correspondant à la direction gauche-droite du véhicule, normale à la direction longitudinale X, et une direction d'élévation Z, correspondant à la hauteur du véhicule, normale aux directions longitudinale X et transversale Y. Lorsque le véhicule ferroviaire 14 circule sur des rails horizontaux, la direction d'élévation Z est verticale.

Le véhicule ferroviaire 14 comprend au moins une caisse 16 portée par au moins un bogie (non représenté). La caisse 16 définit un espace intérieur 18 adapté pour recevoir des équipements et/ou des passagers. L'espace intérieur 18 est délimité par un plafond (non représenté), une pluralité de parois latérales 20 et un plancher 22. Les parois latérales 20 sont munies de vitres et de portes installées dans des ouvertures.

Avantageusement, le véhicule ferroviaire 14 comprend au niveau de chaque porte un marchepied 24 pour faciliter l'accès des personnes et/ou des marchandises à l'espace intérieur 18. Par exemple, le marchepied 24 est propre à se rétracter à l'intérieur dans un espace de stockage lorsque le véhicule ferroviaire 14 circule et à se déployer hors de l'espace de stockage lorsque le véhicule ferroviaire 14 est à l'arrêt au niveau du quai 12.

Le quai 12 présente en son bord 11 une première surface 26 par exemple sensiblement horizontale, et une deuxième surface 28 par exemple sensiblement verticale.

Le dispositif de mesure 10 est adapté pour mesurer un premier écart E₁ entre le bord 11 du quai 12 et le seuil 13 du véhicule ferroviaire 14 dans la direction transversale Y. Sur la figure 1, l'écart E₁ correspond à la distance entre la deuxième surface 28 et un bord libre 29 du marchepied 24 dans la direction transversale Y.

Le dispositif de mesure 10 est en outre adapté pour mesurer un deuxième écart E₂ entre le bord 11 du quai 12 et le seuil 13 du véhicule ferroviaire 14 dans la direction d'élévation Z. Sur la figure 1, le deuxième écart E₂ correspond à la distance entre la première surface 26 du quai 12 et le plancher 22 du véhicule ferroviaire 14 dans la direction d'élévation Z, comme cela sera détaillé ultérieurement.

Comme visible sur la figure 1, le dispositif de mesure 10 comprend un outil de mesure 30 disposé sur le bord 11 du quai 12 et un organe de visée 32 disposé sur le plancher 22 du véhicule ferroviaire 14.

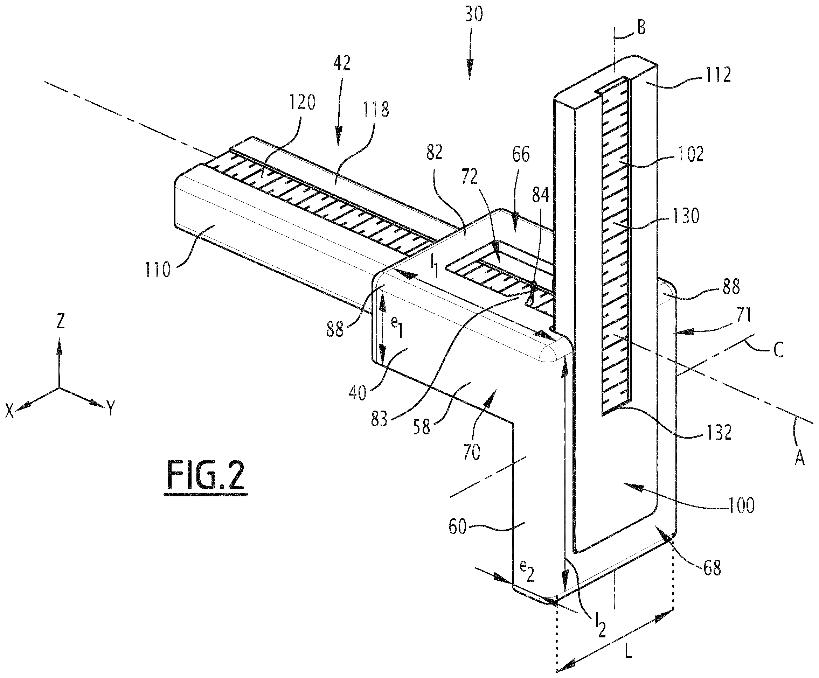

Sur la figure 2, l'outil de mesure 30 comprend un support 40 adapté pour être installé sur le bord 11 du quai 12, une partie mobile 42 montée sur le support 40 et un système indicateur 44 du premier écart E₁ adapté pour fournir une première information représentative du premier écart E₁. Le support 40 et la partie mobile 42 forment entre eux un système de glissière.

Le support 40 comporte au moins une surface de positionnement 46 adaptée pour être en butée contre le quai 12 dans la direction transversale Y et dans la direction d'élévation Z.

Sur les figures 1 et 2, le support 40 présente avantageusement une forme d'équerre. Le support 40 comporte une première branche 58 et une deuxième branche 60 sensiblement normale à la première branche 58. Sur la figure 2, la première branche 58 s'étend selon une première direction A par exemple parallèle à la direction transversale Y. La deuxième branche 60 s'étend selon une deuxième direction B normale à la première direction A, et par exemple parallèle à la direction d'élévation Z.

Le support 40 et la partie mobile 42 sont mobiles entre eux en translation dans la première direction A entre une pluralité de positions dont une position de mesure. Dans la position de mesure, représentée sur la figure 1, le support 40 bute contre le bord 11 du quai 12 et la partie mobile 42 bute contre le véhicule ferroviaire 14.

La surface de positionnement 46 comporte une première face 62 de positionnement, agencée sur la première partie 58, et une deuxième face 64 de positionnement, agencée sur la deuxième branche 60. Le support 40 est ainsi adapté pour être installé sur le bord 11 du quai 12 de manière à ce que la première face 62 de positionnement soit en butée contre la première surface 26 du quai 12, dans la direction d'élévation Z et à ce que la deuxième face 64 de positionnement soit en butée contre la deuxième surface 28 du quai 12, dans la direction transversale Y.

Sur la figure 2, le support 40 comporte une face supérieure 66, s'étendant sur la première branche 58 du côté opposé à la première face de positionnement 62, et une face frontale 68, s'étendant sur la deuxième branche 60 du côté opposé à la deuxième face de positionnement 64. Le support 40 s'étend entre une première face latérale 70 et une deuxième face latérale 71 selon une troisième direction C normale à la première direction A et à la deuxième direction B. Les faces latérales 70, 71 présentent ici une forme de L.

Le support 40 présente une largeur L mesurée selon la troisième direction C par exemple comprise entre 30 mm et 100 mm. Par exemple, la première branche 58 du support 40 présente une longueur I₁ mesurée selon la première direction A par exemple comprise entre 50 mm et 120 mm et une épaisseur e₁ mesurée selon la deuxième direction B par exemple comprise entre 10 mm et 40 mm. Par exemple, la deuxième branche 60 du support 40 présente une longueur I₂ mesurée selon la deuxième direction B comprise entre 30 mm et 100 mm et une épaisseur e₂ mesurée selon la première direction A comprise entre 5 mm et 20 mm.

L'outil de mesure 30 est ainsi apte à mesurer un premier écart latéral E₁ supérieur ou égal à 5 mm.

Sur la figure 2, le support 40 définit un logement 72 adapté pour recevoir la partie mobile 42. Le logement 72 peut prendre différentes formes de manière à coopérer avec la partie mobile 42. Par exemple, le logement 72 est une rainure, notamment une rainure droite, une rainure en T ou une rainure en queue d'aronde, adaptée pour recevoir la partie mobile 42. Le logement 72 joue le rôle de profilé femelle dans le système de glissière formé par le support 40 et la partie mobile 42.

Sur la figure 2, le logement 72 s'étend en partie dans la première branche 58 selon la première direction A et en partie dans la deuxième branche 60 selon la deuxième direction B. La première partie du logement 72 présente ici une forme de rainure en T et est délimitée selon la troisième direction C par les faces latérales 70, 71 et selon la deuxième direction B par la première face de positionnement 62 et en partie par la face supérieure 66. La première partie du logement 72 s'étend selon la première direction A entre une première ouverture 78 et une deuxième ouverture ouvrant sur la deuxième partie du logement 72.

Sur la figure 2, la face supérieure 66 présente en outre un pont 82 s'étendant entre les faces latérales 70, 71. La face supérieure 66 forme une lunette de lecture, comme il sera détaillé par la suite.

La face supérieure 66 comporte en outre un pointeur 83. Sur la figure 2, le pointeur 83 comporte deux dents (dont une seule est visible) faisant saillie par rapport à ladite face supérieure 66 selon la troisième direction C. Chaque dent s'étend entre une des faces latérales 70, 71 et un bord libre 84. De préférence, comme visible sur la figure 2, chaque dent présente une forme sensiblement triangulaire.

La deuxième partie du logement 72 présente une forme de rainure droite. Sur la figure 2, la deuxième partie du logement 72 est délimitée selon la troisième direction C par les faces latérales 70, 71. La deuxième partie s'étend selon la première direction A entre la deuxième face de positionnement 60 et une ouverture, et selon la deuxième direction B entre une surface de blocage 86 et une ouverture débouchant dans la première partie du logement 72.

Sur les figures 1 et 2, le support 40 présente une pluralité d'arêtes 88 arrondies joignant entre elles plusieurs faces du support 40. En variante, le support 40 présente des arêtes droites.

Le support 40 est par exemple réalisé en métal, notamment en aluminium, en matériau plastique ou en autres matières rigides. Avantageusement, le support 40 est réalisé par fabrication additive, par exemple par stéréolithographie.

La partie mobile 42 est montée sur le support 40 et est mobile en translation par rapport au support 40 dans la première direction A entre une pluralité de positions, dont une position dite de rangement, visible sur la figure 2, et la position de mesure, visible sur la figure 1. Sur la figure 1, la partie mobile 42 définit une face de butée 100 adaptée pour buter contre le bord libre du marchepied 24.

Avantageusement, la partie mobile 42 est montée sensiblement sans jeu par rapport au support 40 selon la deuxième direction B.

La partie mobile 42 comporte en outre une cible 102 apte à coopérer avec l'organe de visée 32.

Sur les figures 1 et 2, la partie mobile 42 présente sensiblement une forme de T et comporte un premier bras 110 et une deuxième bras 112.

Le premier bras 110 s'étend selon la première direction A entre une première extrémité distale 114 et une première extrémité proximale 115 par exemple sur une longueur comprise entre 100 mm et 300 mm.

Le deuxième bras 112 s'étend selon la deuxième direction B entre une deuxième extrémité distale 116 et une deuxième extrémité proximale 117 par exemple sur une longueur comprise entre 100 mm et 500 mm. L'outil de mesure 30 est ainsi adapté pour mesurer et/ou évaluer un deuxième écart latéral E₂ inférieur ou égal à 500 mm. Par exemple, l'outil de mesure 30 est adapté pour mesurer une lacune verticale comprise entre -80 mm et +150 mm (le signe « - » indique ici que le plancher 22 du véhicule ferroviaire 14 se trouve plus bas que la première surface 26 du quai 12 et le signe « + » indique ici que le plancher 22 du véhicule ferroviaire 14 se trouve plus haut que la première surface 26 du quai 12).

La face de butée 100 est avantageusement définie par une face du deuxième bras 112.

Le premier bras 110 et le deuxième bras 112 sont de préférence d'un seul tenant, c'est-à-dire que la partie mobile 42 est dépourvue d'élément de fixation pour maintenir le premier bras 110 et le deuxième bras 113 solidaires entre eux.

Le premier bras 110 fait saillie par rapport au deuxième bras 112 au niveau de la première extrémité proximale 115 du côté opposé à la face de butée 100. Par exemple, le deuxième bras 112 s'étend de part et d'autre du premier bras 110 selon la deuxième direction B.

Le premier bras 110 et le deuxième bras 112 présentent chacun sensiblement une forme de parallélépipède rectangle.

Le premier bras 110 est reçu dans la première partie du logement 72 et s'étend à travers l'ouverture 78. De préférence, le premier bras 110 présente une section transversale selon un plan normal à la première direction A sensiblement égale à la section de la première partie du logement 72 selon le même plan. Le débattement du premier bras 110 à l'intérieur du logement 72 selon les deuxième et troisième directions B, C est ainsi minimisé.

La longueur du premier bras 110 coulissant dans le support 40 est ajustable suivant les configuration train, métro ou autre matériel roulant.

Le premier bras 110 est adapté pour coulisser à l'intérieur de la première partie du logement 72 selon la première direction A, notamment à travers l'ouverture 78. Le premier bras 110 joue alors le rôle de profilé mâle dans le système de glissière formé par la support 40 et la partie mobile 42.

Le premier bras 110 présente une face supérieure 118 s'étendant du côté opposé à la surface de positionnement 62 du support 40. Ladite face supérieure 118 est adaptée pour être visible par un opérateur à travers la lunette de lecture lorsque l'outil de mesure 30 est disposé sur le bord 11 du quai 12 comme visible sur la figure 1.

Le premier bras 110 comporte une première réglette 120 agencée sur la face supérieure 118. De préférence, la première réglette 120 s'étend selon la première direction A entre la première extrémité distale 114 et la première extrémité proximale 115. Sur la figure 2, la première réglette 120 est disposée à l'intérieur d'une rainure réalisée dans le premier bras 110. La première réglette 120 comporte une pluralité de graduations 122 espacées les unes des autres de manière régulière. La dent 83 du support 40 est adaptée pour indiquer une graduation 122.

Le deuxième bras 112 est adapté pour former la cible 102 apte à coopérer avec l'organe de visée 32. Dans la position de rangement, une partie du deuxième bras 112 est en butée contre la deuxième branche 60 du support 40 et est reçue dans la deuxième partie du logement 72. Avantageusement, dans la position de rangement, la face de butée 100 affleure avec la face frontale 68 du support 40.

Le deuxième bras 112 comporte avantageusement une deuxième réglette 130 disposée sur la face de butée 100. La deuxième réglette 130 s'étend selon la deuxième direction B, par exemple entre la deuxième extrémité distale 116 et la deuxième extrémité proximale 117. En variante, comme visible sur la figure 2, la deuxième réglette 130 s'étend sur une partie seulement de la face de butée 100, entre la deuxième extrémité proximale 117 et un point intermédiaire 132 de la face de butée 100, le point intermédiaire 132 se trouvant dans le prolongement de la première surface de positionnement 62 dans la première direction A. Sur la figure 2, la deuxième réglette 130 est disposée à l'intérieur d'une rainure réalisée dans le deuxième bras 112. La deuxième réglette 130 joue ici le rôle de cible apte à coopérer avec l'organe de visée 32

La partie mobile 42 est par exemple réalisé en métal, notamment en aluminium, en matériau plastique ou en autres matières rigides. Avantageusement, la partie mobile 42 est réalisé par fabrication additive, par exemple par stéréolithographie.

Le système indicateur 44 du premier écart E₁ est adapté pour fournir une première information représentative du premier écart E₁ lorsque la partie mobile 42 est dans la position de mesure. Par exemple, ladite première information est la distance entre le bord 11 du quai 12 et le bord libre du marchepied 24 selon la direction transversale Y. Ainsi, lorsque le système indicateur 44 du premier écart E₁ est formée de la première réglette 120 et du pointeur 83, ledit pointeur 83 est adapté pour indiquer sur la première réglette 120 une graduation 122 correspondant à l'écart E₁.

L'organe de visée 32 est adapté pour projeter un faisceau 150 sur la partie mobile 42, notamment sur le deuxième bras 112. Sur la figure 1, l'organe de visée 32 comporte un boitier présentant une surface d'appui 154 placée en contact avec le plancher 22 du véhicule ferroviaire 14.

L'organe de visée 32 est de préférence un niveau laser apte à produire un faisceau laser 150 selon un plan sensiblement horizontal lorsque le niveau laser est disposé sur le plancher 22 du véhicule ferroviaire 14. La hauteur du faisceau 150 par rapport à la surface d'appui 154 selon la direction d'élévation Z est avantageusement connue.

L'outil de mesure 30 est adapté pour coopérer avec l'organe de visée 32 et pour indiquer une deuxième information représentative du deuxième écart E₂ entre le bord 11 du quai 12 et le seuil 13 du véhicule ferroviaire 14 dans la direction d'élévation Z du véhicule ferroviaire 14. Par exemple, ladite deuxième information est la distance entre le bord 11 du quai 12 et le plancher 22 du véhicule ferroviaire 14 selon la direction d'élévation Z. L'organe de visée 32 est ainsi adapté pour projeter un faisceau 150 sur l'outil de mesure 30, en particulier sur la cible 102 formée par le deuxième bras 112 de la partie mobile 42 (figure 1), et pour fournir ladite deuxième information.

Un procédé de mesure d'un écart entre le bord 11 du quai 12 et le seuil 13 du véhicule ferroviaire 14 visible sur la figure 1 va à présent être décrit.

Initialement, un dispositif de mesure 10 selon l'invention est obtenu.

L'outil de mesure 30 est installé sur le bord 11 du quai 12. Pour cela, le support 40 est installé sur le bord 11 du quai 12, de sorte que la surface de positionnement 46 soit en butée contre le quai 12 dans la direction transversale Y et dans la direction d'élévation Z. Plus précisément, la première face 62 de positionnement est en butée contre la première surface 26 du quai 12, dans la direction d'élévation Z, et la deuxième face 64 de positionnement est en butée contre la deuxième surface 28 du quai 12, dans la direction transversale Y. La partie mobile 42 est alors de préférence dans la position de rangement.

Puis, la partie mobile 42 est déplacée par rapport au support 40 par translation selon la direction transversale Y et est mise dans la position de mesure. Sur la figure 1, le deuxième bras 112 est en butée contre le bord libre 29 du marchepied 24.

Le système indicateur 44 du premier écart E₁ fournit alors par lecture une première information représentative dudit premier écart E₁. Le pointeur 83 coopère avec la première réglette 120 en indiquant sur ladite réglette 120 la distance parcourue par la partie mobile 42 entre la position de rangement et la position de mesure. Ladite distance correspond au premier écart E₁, c'est-à-dire à la lacune horizontale entre le quai 12 et le marchepied 24.

L'organe de visée 32 est disposée sur le seuil 13, par exemple sur le plancher 22 du véhicule ferroviaire 14, pour mesurer la lacune verticale entre le quai 12 et le plancher 22 du véhicule ferroviaire 14. Toutefois, l'homme du métier comprend que l'organe de visée est adapté pour être installé sur une autre surface, par exemple sur le marchepied 24, en fonction de la surface dont on veut mesurer l'écart avec le quai 12.

L'organe de visée 32 est mis en oeuvre et projette un faisceau 150 sur la partie mobile 42 de l'outil de mesure. Le faisceau 150 joue alors le rôle de pointeur et est projeté sur la deuxième réglette 130. Une deuxième information représentative du deuxième écart E₂ est ainsi obtenue par lecture. La hauteur du faisceau 150 par rapport à la surface d'appui 154 selon la direction d'élévation Z étant connue, il est facile pour l'opérateur d'obtenir la valeur du deuxième écart E₂ en fonction de l'endroit pointé par le faisceau 150.

En variante (non représentée), le support 40 et la partie mobile 42 forme un système de glissière dans lequel le support 40 joue le rôle de profilé mâle et la partie mobile 42 joue le rôle de profilé femelle. Par exemple, la première branche 58 du support 40 présente une languette et le premier bras 110 de la partie mobile 42 présente une rainure, la languette étant configurée pour être reçue dans ladite rainure et pour coulisser dans celle-ci.

En variante (non représentée), le système indicateur 44 du premier écart E₁ comporte une réglette disposée sur le support 40, par exemple sur la face supérieure 66 du support 40, et un pointeur disposé sur la partie mobile 42, en particulier sur le premier bras 110.

En variante (non représentée), la première information représentative du premier écart E₁ est une valeur booléenne. Par exemple, la première réglette 120 définit une pluralité de zones réparties selon la première direction A dont au moins une zone dite de rejet et une zone dite acceptable. Lorsque, dans la position de mesure, le pointeur 83 indique une zone de rejet, le premier écart E₁ ne respecte pas les requis dimensionnels. Au contraire, lorsque le pointeur 83 indique une zone acceptable dans la position de mesure, le premier écart E₁ respecte les requis dimensionnels. En variante, la deuxième information représentative du deuxième écart E₂ est une valeur booléenne. Par exemple, la deuxième réglette 130 définit une pluralité de zones réparties selon la deuxième direction B dont au moins une zone dite de rejet et une zone dite acceptable. Lorsque, dans la position de mesure, l'organe de visée 32 projette le faisceau 150 dans une zone de rejet, le deuxième écart E₂ ne respecte pas les requis dimensionnels. Au contraire, l'organe de visée 32 projette le faisceau 150 dans la position de mesure, le deuxième écart E₂ respecte les requis dimensionnels. L'opérateur vérifie ainsi que l'écart se trouve dans une gamme donnée. Un tel système est particulièrement adapté lorsqu'il n'est pas nécessaire de connaitre la valeur exacte l'écart entre le bord du quai et le seuil du véhicule ferroviaire.

Le dispositif de mesure 10 selon l'invention est ainsi adapté pour mesurer à la fois le premier écart latéral E₁ selon la direction transversale Y et le deuxième écart latéral E₂ selon la direction d'élévation Z. Le positionnement de l'outil de mesure 30 sur le bord 11 du quai 12 est facile grâce à la surface de positionnement 46. Les sources d'erreurs sont donc limitées. La répétabilité des mesures est ainsi améliorée. La mesure des écarts horizontaux et/ou verticaux est à la fois plus rapide et plus précise qu'avec un simple mètre et une règle, comme dans l'état de la technique. Par ailleurs, le dispositif de mesure 10 est facile à fabriquer.

La prise de mesure des écarts entre le bord de quai et le seuil du véhicule ferroviaire est ainsi améliorée, grâce à une meilleure précision et à une meilleure répétabilité des mesures.

L'outil de mesure 30 est de plus simple et rapide à fabriquer. L'utilisation de la stéréolithographie permet en outre de réduire les coûts de fabrication unitaire d'outils de mesure 30.

## Revendications

1. Dispositif de mesure (10) adapté pour mesurer un écart entre un bord (11) d'un quai (12) et un seuil (13) d'un véhicule ferroviaire (14), le dispositif de mesure (10) comprenant un outil de mesure (30) adapté pour mesurer un premier écart (E₁) entre le bord (11) du quai (12) et le seuil (13) du véhicule ferroviaire (14), le premier écart (E₁) étant mesuré dans une direction transversale (Y) du véhicule ferroviaire (14), l'outil de mesure (30) comprenant :
- un support (40) adapté pour être installé sur le bord (11) du quai (12), le support (40) comportant au moins une surface de positionnement (46) destinée à être en butée contre le quai (12) dans la direction transversale (Y) et dans une direction d'élévation (Z) sensiblement normale à la direction transversale (Y) ;
- une partie mobile (42) montée sur le support (40) et mobile en translation par rapport au support (40) dans une première direction (A) entre une pluralité de positions, dont une position de mesure dans laquelle le support (40) est destiné à buter contre le bord (11) du quai (12) et la partie mobile (42) est destinée à buter contre le seuil (13) du véhicule ferroviaire (14) ; et
- un système indicateur (44) du premier écart (E₁) adapté pour fournir une première information représentative du premier écart (E₁) lorsque la partie mobile (42) est dans la position de mesure,
le dispositif de mesure (30) comprenant en outre un organe de visée (32) adapté pour projeter un faisceau (150) sur la partie mobile (42), l'organe de visée (32) étant de préférence un niveau laser,
l'outil de mesure (30) étant en outre adapté pour coopérer avec l'organe de visée (32) pour fournir une deuxième information représentative d'un deuxième écart (E₂) entre le bord (11) du quai (12) et le seuil (13) dans la direction d'élévation (Z), la partie mobile (42) étant adaptée pour former une cible (102) apte à coopérer avec l'organe de visée (32) pour fournir la deuxième information représentative du deuxième écart (E₂).

2. Dispositif de mesure (10) selon la revendication 1, dans lequel la surface de positionnement (46) comporte une première face de positionnement (62) et une deuxième face de positionnement (64) sensiblement normale à la première face de positionnement (62), le support (40) étant adapté pour être installé sur le bord (11) du quai (12) de manière à ce que la première face de positionnement (62) soit en butée contre le quai (12) dans la direction d'élévation (Z) et à ce que la deuxième face de positionnement (64) soit en butée contre le quai (12) dans la direction transversale (Y), la première direction (A) étant de préférence sensiblement parallèle à la direction transversale (Y).

3. Dispositif de mesure (10) selon la revendication 1 ou 2, dans lequel le support (40) et la partie mobile (42) forment un système de glissière dans la première direction (A), l'un du support (40) et de la partie mobile (42) comportant un profilé mâle et l'autre du support (40) et de la partie mobile (42) comportant un profilé femelle adapté pour coopérer avec le profilé mâle.

4. Dispositif de mesure (10) selon l'une quelconque des revendications 1 à 3, dans lequel le système indicateur (44) du premier écart (E₁) comporte une réglette (120) disposée sur l'un du support (40) et de la partie mobile (42) et un pointeur (83) disposé sur l'autre du support (40) et de la partie mobile (42).

5. Dispositif de mesure (10) selon l'une quelconque des revendications 1 à 4, dans lequel la partie mobile (42) comprend un premier bras (110) s'étendant selon la première direction (A) et un deuxième bras (112) s'étendant selon une deuxième direction (B) sensiblement normale à la première direction (A), le deuxième bras (112) formant la cible (102), le premier bras (110) et le deuxième bras (112) étant de préférence d'un seul tenant.

6. Dispositif de mesure (10) selon la revendication 5, dans lequel la partie mobile (42) est montée sensiblement sans jeu par rapport au support (40) selon la deuxième direction (B).

7. Procédé de mesure d'un écart entre un bord (11) d'un quai (12) et un seuil (13) d'un véhicule ferroviaire (14), le procédé comprenant les étapes suivantes :
- obtention d'un dispositif de mesure (10) selon l'une quelconque des revendications 1 à 6 ;
- installation du support (40) de l'outil de mesure (30) sur le bord (11) du quai (12), la surface de positionnement (46) étant en butée contre le quai (12) dans la direction transversale (Y) et dans la direction d'élévation (Z) ;
- mise de la partie mobile (42) dans la position de mesure ;
- obtention de la première information représentative du premier écart (E₁) à l'aide du système indicateur (44) du premier écart (E₁) ;
- installation de l'organe de visée (32) sur le seuil (13) du véhicule ferroviaire (14) ;
- coopération de l'organe de visée (32) avec la partie mobile (42) ; et
- obtention de la deuxième information représentative du deuxième écart (E2).

## Patentansprüche

1. Messvorrichtung (10), die angepasst ist, um einen Abstand zwischen einer Rand (11) eines Bahnsteigs (12) und einer Schwelle (13) eines Schienenfahrzeugs (14) zu messen, die Messvorrichtung (10) umfassend ein Messinstrument (30), das angepasst ist, um einen ersten Abstand (E₁) zwischen dem Rand (11) des Bahnsteigs (12) und der Schwelle (13) des Schienenfahrzeugs (14) zu messen, wobei der erste Abstand (E₁) in einer Querrichtung (Y) des Schienenfahrzeugs (14) gemessen wird, das Messinstrument (30) umfassend:
- eine Halterung (40), die angepasst ist, um an dem Rand (11) des Bahnsteigs (12) installiert zu werden, die Halterung (40) umfassend mindestens eine Positionierungsfläche (46), die dazu bestimmt ist, in der Querrichtung (Y) und in einer Erhebungsrichtung (Z), die im Wesentlichen senkrecht zu der Querrichtung (Y) ist, an den Bahnsteig (12) anzustoßen;
- einen beweglichen Teil (42), der an der Halterung (40) montiert und in Bezug auf die Halterung (40) in eine erste Richtung (A) translatorisch zwischen einer Vielzahl von Positionen beweglich ist, darunter eine Messposition, in der die Halterung (40) dazu bestimmt ist, an den Rand (11) des Bahnsteigs (12) anzustoßen, und der bewegliche Teil (42) dazu bestimmt ist, an die Schwelle (13) des Schienenfahrzeugs (14) anzustoßen; und
- ein Anzeigesystem (44) für den ersten Abstand (E₁), das angepasst ist, um erste Informationen bereitzustellen, die repräsentativ für den ersten Abstand (E₁) sind, wenn der bewegliche Teil (42) in der Messposition ist,
die Messvorrichtung (30) ferner umfassend ein Zielelement (32), das angepasst ist, um einen Strahl (150) auf den beweglichen Teil (42) zu projiziert, wobei das Zielelement (32) vorzugsweise ein Laser-Nivelliergerät ist,
wobei das Messinstrument (30) ferner angepasst ist, um mit dem Zielelement (32) zusammenzuwirken, um zweite Informationen bereitzustellen, die repräsentativ für einen zweiten Abstand (E₂) zwischen dem Rand (11) des Bahnsteigs (12) und der Schwelle (13) in Aufwärtsrichtung (Z) sind, wobei der bewegliche Teil (42) angepasst ist, um ein Ziel (102) zu bilden, das mit dem Zielelement (32) zusammenwirken kann, um die zweiten Informationen bereitzustellen, die repräsentativ für den zweiten Abstand (E₂) sind.

2. Messvorrichtung (10) nach Anspruch 1, wobei die Positionierungsfläche (46) eine erste Positionierungsfläche (62) und eine zweite Positionierungsfläche (64) im Wesentlichen senkrecht zu der ersten Positionierungsfläche (62) umfasst, wobei die Halterung (40) angepasst ist, um an dem Rand (11) des Bahnsteigs (12) installiert zu werden, sodass die erste Positionierungsfläche (62) in Aufwärtsrichtung (Z) an den Bahnsteig (12) anstößt und dass die zweite Positionierungsfläche (64) in Abwärtsrichtung (Z) an den Bahnsteig (12) anstößt, wobei die erste Richtung (A) vorzugsweise im Wesentlichen parallel zu der Querrichtung (Y) ist.

3. Messvorrichtung (10) nach Anspruch 1 oder 2, wobei die Halterung (40) und der bewegliche Teil (42) ein Gleitsystem in die erste Richtung (A) bilden, wobei eines von der Halterung (40) oder dem beweglichen Teil (42) umfassend ein Steckprofil und das andere von der Halterung (40) und dem beweglichen Teil (42) umfassend ein Buchsenprofil, das angepasst ist, um mit dem Steckprofil zusammenzuwirken.

4. Messvorrichtung (10) nach einem der Ansprüche 1 bis 3, wobei das Anzeigesystem (44) für den ersten Abstand (E₁) eine Messleiste (120), die an einem von der Halterung (40) und dem beweglichen Teil (42) angeordnet ist, und einen Zeiger (83), der an dem anderen von der Halterung (40) und dem beweglichen Teil (42) angeordnet ist, umfasst.

5. Messvorrichtung (10) nach einem der Ansprüche 1 bis 3, wobei der bewegliche Teil (42) einen ersten Arm (110), der sich in die erste Richtung (A) erstreckt, und einen zweiten Arm (112), der sich in die zweite Richtung (B) im Wesentlichen senkrecht zu der ersten Richtung (A) erstreckt, wobei der zweite Arm (112) das Ziel (102) bildet, wobei der erste Arm (110) und der zweite Arm (112) vorzugsweise einstückig sind.

6. Messvorrichtung (10) nach Anspruch 5, wobei der bewegliche Teil (42) im Wesentlichen spielfrei in Bezug auf die Halterung (40) in die zweite Richtung (B) montiert ist.

7. Verfahren zum Messen eines Abstands zwischen einem Rand (11) eines Bahnsteigs (12) und einer Schwelle (13) eines Schienenfahrzeugs (14), das Verfahren umfassend die folgenden Schritte:
- Erlangen einer Messvorrichtung (10) nach einem der Ansprüche 1 bis 6;
- Anbringen der Halterung (40) des Messinstruments (30) an dem Rand (11) des Bahnsteigs (12), wobei die Positionierungsfläche (46) in Querrichtung (Y) und in Höhenrichtung (Z) an den Bahnsteig (12) anstößt;
- Bringen des beweglichen Teils (42) in die Messposition;
- Erlangen der ersten Informationen, die repräsentativ für den ersten Abstand (E₁) sind, mithilfe des Anzeigesystems (44) für den ersten Abstand (E₁);
- Anbringen des Zielelements (32) an der Schwelle (13) des Schienenfahrzeugs (14);
- Zusammenwirken des Zielelements (32) mit dem beweglichen Teil (42); und
- Erlangen der zweiten Informationen, die repräsentativ für den zweiten Abstand (E₂) sind.

## Claims

1. A measuring device (10) adapted to measure a distance between an edge (11) of a platform (12) and a sill (13) of a rail vehicle (14), the measuring device (10) comprising a measuring tool (30) adapted to measure a first distance (E₁) between the edge (11) of the platform (12) and the sill (13) of the rail vehicle (14), the first distance (E₁) being measured in a transverse direction (Y) of the rail vehicle (14), the measuring tool (30) comprising:
- a support (40) adapted to be installed on the edge (11) of the dock (12), the support (40) having at least one locating surface (46) for abutting the dock (12) in the transverse direction (Y) and in an elevation direction (Z) substantially normal to the transverse direction (Y);
- a movable part (42) mounted on the support (40) and translatable relative to the support (40) in a first direction (A) between a plurality of positions, including a measuring position in which the support (40) is intended to abut the edge (11) of the dock (12) and the movable part (42) is intended to abut the sill (13) of the rail vehicle (14); and
- an indicator system (44) of the first deviation (E₁) adapted to provide first information representative of the first deviation (E₁) when the movable part (42) is in the measuring position,
the measuring device (30) further comprising an aiming member (32) adapted to project a beam (150) onto the moving part (42), the aiming member (32) preferably being a laser level,
the measuring tool (30) being further adapted to cooperate with the sighting member (32) to provide second information representative of a second deviation (E₂) between the edge (11) of the platform (12) and the sill (13) in the direction of elevation (Z), the movable part (42) being adapted to form a target (102) capable of cooperating with the sighting member (32) to provide the second piece of information representative of the second deviation (E₂).

2. A measuring device (10) as claimed in claim 1, wherein the locating surface (46) comprises a first locating face (62) and a second locating face (64) substantially normal to the first locating face (62), the support (40) being adapted to be installed on the edge (11) of the dock (12) so that the first locating face (62) abuts the dock (12) in the elevational direction (Z) and the second locating face (64) abuts the dock (12) in the transverse direction (Y), the first direction (A) preferably being substantially parallel to the transverse direction (Y).

3. Measuring device (10) according to claim 1 or 2, wherein the holder (40) and the movable part (42) form a slide system in the first direction (A), one of the holder (40) and the movable part (42) having a male profile and the other of the holder (40) and the movable part (42) having a female profile adapted to cooperate with the male profile.

4. A measuring device (10) according to any one of claims 1 to 3, wherein the indicator system (44) of the first deviation (E₁) comprises a ruler (120) arranged on one of the support (40) and the movable part (42) and a pointer (83) arranged on the other of the support (40) and the movable part (42).

5. A measuring device (10) according to any one of claims 1 to 3, wherein the movable part (42) comprises a first arm (110) extending in the first direction (A) and a second arm (112) extending in a second direction (B) substantially normal to the first direction (A), the second arm (112) forming the target (102), the first arm (110) and the second arm (112) preferably being in one piece.

6. The measuring device (10) according to claim 5, wherein the movable part (42) is mounted substantially free of play relative to the support (40) in the second direction (B).

7. A method of measuring a gap between an edge (11) of a platform (12) and a sill (13) of a rail vehicle (14), the method comprising the following steps:
- obtaining a measuring device (10) according to any one of claims 1 to 6;
- installation of the support (40) of the measuring tool (30) on the edge (11) of the platform (12), with the positioning surface (46) abutting the platform (12) in the transverse direction (Y) and in the elevation direction (Z);
- bringing the movable part (42) into the measuring position;
- obtaining the first information representative of the first deviation (E₁) by means of the indicator system (44) of the first deviation (E₁);
- installation of the sighting device (32) on the sill (13) of the rail vehicle (14);
- cooperation of the aiming member (32) with the moving part (42); and
- obtaining the second information representative of the second deviation (E₂).
